# EUROPÄISCHE PATENTSCHRIFT

(11) **EP 2 956 693 B1**
(45) Veröffentlichungstag und Bekanntmachung des Hinweises auf die Patenterteilung: **07.04.2021**
(21) Anmeldenummer: 14705994.3
(22) Anmeldetag: 11.02.2014
(51) Int. Cl.: F16H 63/30, F16H 59/70

(54) **FAHRZEUGGETRIEBE, VERFAHREN UND SENSORVORRICHTUNG ZUM ERFASSEN EINER SCHALTSTELLUNG EINES FAHRZEUGGETRIEBES**
VEHICLE TRANSMISSION, METHOD, AND SENSOR DEVICE FOR DETECTING A SHIFTING POSITION OF A VEHICLE TRANSMISSION
BOÎTE DE VITESSES DE VÉHICULE, PROCÉDÉ ET DISPOSITIF DÉTECTEUR POUR DÉTECTER UNE POSITION D'ENCLENCHEMENT D'UNE BOÎTE DE VITESSES DE VÉHICULE

(30) Priorität: 14.02.2013 DE 102013101503
(43) Veröffentlichungstag der Anmeldung: 23.12.2015
(73) Patentinhaber: KNORR-BREMSE Systeme für Nutzfahrzeuge GmbH, 80809 München (DE)
(72) Erfinder: HUBER, Christian, 80937 München (DE); WINTER, Simon, 81241 München (DE); ROTTER, Martin, 82131 Gauting (DE)
(86) Internationale Anmeldenummer: PCT/EP2014/052600
(87) Internationale Veröffentlichungsnummer: WO 2014/124921

(56) Entgegenhaltungen:
- EP-A1- 1 617 109
- WO-A1-2009/119115
- DE-B3-102006 028 785
- JP-A- S6 184 445
- US-A- 5 038 627

## Beschreibung

Die vorliegende Erfindung bezieht sich auf ein Fahrzeuggetriebe und auf ein Verfahren zum Erfassen einer Schaltstellung eines solchen Fahrzeuggetriebes.

Zum Erfassen einer Schaltstellung eines Fahrzeuggetriebes werden häufig induktive Sensoren, z. B. Tauchspulen, Planarspulen und dergleichen eingesetzt. Hierbei ist in PKW-Applikationen üblicherweise insbesondere ein Permanentmagnet in einem Getrieberaum bzw. Ölraum angeordnet und ein Sensorelement vom Ölraum getrennt angeordnet.

Die DE 10 2006 028785 B3 offenbart eine Anordnung von Positionsgebern an einer Schaltstange für automatisierte Geschwindigkeits-Wechselgetriebe in Kraftfahrzeugen, die mit gehäusefesten Positionssensoren einer elektrischen Gangerkennungsschaltung zusammenwirken. Es sind zwei durch eine ölraumtrennende Querwand voneinander getrennte Getrieberäume vorgesehen, wobei die Positionsgeber und die Positionssensoren gemeinsam in einem der Räume angeordnet sind.

Die EP 1 617109 A1 offenbart eine Anordnung zur Erfassung der Lageposition einer Schaltgabel eines Schaltgetriebes mit einem Geberelement und einer Erfassungseinrichtung, die gemeinsam in einem Raum angeordnet sind. Alternativ kann die Erfassungseinrichtung in einem dem Raum umschließenden Hauptkörper integriert sein.

Es ist die Aufgabe der vorliegenden Erfindung, eine verbesserte Sensorvorrichtung zum Erfassen einer Schaltstellung eines Fahrzeuggetriebes, ein verbessertes Fahrzeuggetriebe und ein verbessertes Verfahren zum Erfassen einer Schaltstellung eines Fahrzeuggetriebes zu schaffen.

Diese Aufgabe wird durch ein Fahrzeuggetriebe und ein Verfahren zum Erfassen einer Schaltstellung des besagten Fahrzeuggetriebes gemäß den unabhängigen Ansprüchen gelöst.

Vorteilhafte Ausgestaltungen der Erfindung gehen aus den abhängigen Ansprüchen hervor.

Gemäß Ausführungsformen der vorliegenden Erfindung kann ein Geberelement eines Sensors zum Erfassen einer Schaltstellung eines Fahrzeuggetriebes von einem Schmierstoffe enthaltenden Getrieberaum, auch Ölraum genannt, des Fahrzeuggetriebes abgedichtet, getrennt bzw. abgekapselt sein. Dabei ist das Geberelement insbesondere an einem Bauteil angeordnet, das zur Übertragung einer von einer Änderung der Schaltstellung abhängigen Bewegung eines Getriebeelements auf das Geberelement ausgebildet ist.

Durch die Trennung bzw. Kapselung des Geberelements vom eigentlichen Getrieberaum des Fahrzeuggetriebes kann eine Gefahr einer Verschmutzung des Geberelements beispielsweise durch Späne von Getriebeelementen in dem Getrieberaum bzw. Ölraum vermieden oder ausgeschlossen werden. Insbesondere kann eine Verschmutzung des Geberelements durch ferritische Partikel von Getriebeelementen in dem Getrieberaum bzw. Ölraum verhindert werden. Somit können eine Erfassungsgenauigkeit sowie eine Langlebigkeit einer Sensorvorrichtung zum Erfassen einer Schaltstellung eines Fahrzeuggetriebes verbessert werden.

Somit kann für ein Getriebesteuermodul ein Sensor bzw. eine Sensorvorrichtung mit einem Geberelement beispielsweise in Gestalt eines Permanentmagneten verwendet werden. Das Geberelement kann in einem von dem Getrieberaum abgedichteten, separaten Raum angeordnet sein. Eine Erfassungseinrichtung des Sensors kann beispielsweise vom Getrieberaum getrennt angeordnet sein. Die Erfassungseinrichtung und das Geberelement können voneinander beabstandet angeordnet sein. Durch die Anordnung des Geberelements in einem separaten abgedichteten Raum kann zuverlässig verhindert werden, dass ein magnetisches Geberelement beispielsweise ferritische Partikel aus dem Getrieberaum anzieht und unbeabsichtigterweise als Spänesammler fungiert. Somit kann eine verschmutzungsbedingte Änderung eines Sensorsignals über eine Lebenszeit der Sensorvorrichtung hinweg, in der Art, dass eine Wegposition falsch erfasst würde, vermieden werden.

Bei dem Fahrzeuggetriebe kann es sich um ein manuelles Schaltgetriebe, Direktschaltgetriebe, automatisiertes Schaltgetriebe (AMT) oder ein automatisches Getriebe (AT) handeln. Das Fahrzeuggetriebe kann für ein Fahrzeug vorgesehen sein, bei dem es sich um ein Kraftfahrzeug, wie beispielsweise einen Personenkraftwagen oder Lastkraftwagen, ein Schienenfahrzeug oder ein Wasserfahrzeug handeln kann. Der Getrieberaum des Fahrzeuggetriebes kann zumindest teilweise von einem Getriebegehäuse umschlossen sein. In dem Getrieberaum können die Getriebeelemente sowie zumindest ein Schmierstoff angeordnet sein. Bei den Getriebeelementen kann es sich um Getriebewellen, Zahnräder, Ritzel, eine Schaltwelle, eine Schaltgabel und dergleichen handeln. Der Getrieberaum kann durch frei bewegliche Späne verunreinigt sein. Die Schaltstellung bzw. ein Schaltzustand des Fahrzeuggetriebes kann einem eingelegten Gang bzw. einer eingelegten Fahrstufe des Fahrzeugs entsprechen. Die Sensorvorrichtung kann auf einem berührungslosen Erfassungsprinzip basieren. Der Nebenraum kann von dem Getrieberaum abgedichtet und bezüglich einer Umgebung des Fahrzeuggetriebes getrennt oder mittels einer Öffnung verbunden sein. Dadurch kann der Nebenraum frei von den sich im Getrieberaum befindlichen Spänen gehalten werden. Bei dem Stabelement kann es sich um eine Stange, Kolbenstange oder dergleichen handeln. Das Stabelement kann aus einem nichtmagnetischen Material ausgeformt sein. An einem ersten Ende des Stabelements kann die Schnittstelle angeordnet sein und an einem zweiten Ende des Stabelements kann der Aufnahmeabschnitt angeordnet sein. Die Schnittstelle des Stabelements verbleibt bei einer von der Schaltstellung abhängigen Bewegung des Stabelements in dem Getrieberaum. Der Aufnahmeabschnitt des Stabelements verbleibt bei einer von der Schaltstellung abhängigen Bewegung des Stabelements in dem Nebenraum. Die Schnittstelle kann einen Anbringungsabschnitt zum Anbringen eines Verbindungselements zu dem abhängig von der Schaltstellung positionierten Getriebeelement aufweisen. Der Aufnahmeabschnitt kann ausgebildet sein, um das Geberelement aufzunehmen. Indem das Geberelement innerhalb des Nebenraums angeordnet ist, ist das Geberelement vor einer Verunreinigung der sich im Getrieberaum befindlichen Späne, die durch das Geberelement angezogen werden könnten, geschützt. Die Erfassungseinrichtung ist erfindungsgemäß außerhalb des Getrieberaums des Fahrzeuggetriebes angeordnet.

Erfindungsgemäß ist zumindest ein Dichtelement zum fluiddichten und/oder partikeldichten Abdichten des Nebenraums von dem Getrieberaum vorgesehen. Hierbei ist das Stabelement durch das zumindest eine Dichtelement hindurchgeführt. Insbesondere kann das zumindest eine Dichtelement ausgebildet sein, um eine zu den Getrieberaum hin Öffnung des Nebenraums, beispielsweise gegenüber Spänen abzudichten. Das zumindest eine Dichtelement kann eine Dichtmanschette, einen Dichtungsring oder dergleichen aufweisen. Das zumindest eine Dichtelement kann ausgebildet sein, um eine von einer Änderung der Schaltstellung abhängige Bewegung des Stabelements zu ermöglichen, wobei eine Abdichtungswirkung des zumindest einen Dichtelements beibehalten ist. Eine solche Ausführungsform bietet den Vorteil, dass der Nebenraum zuverlässig von dem Getrieberaum bei erhaltener Beweglichkeit des Stabelements abgedichtet werden kann.

Ferner kann zumindest ein Führungselement vorgesehen sein, das in dem Nebenraum zumindest teilweise um das Stabelement herum angeordnet ist. Hierbei kann das zumindest eine Führungselement ausgebildet sein, um bei einer von einer Änderung der Schaltstellung abhängigen Bewegung des Stabelements das Stabelement in dem Nebenraum entlang einer Bewegungsachse des Stabelements zu führen. Das zumindest eine Führungselement kann als ein Gleitlager ausgeformt sein oder fungieren. Eine solche Ausführungsform bietet den Vorteil, dass aufgrund des zumindest einen Führungselements ein Verkanten des Stabelements mit dem Geberelement bzw. Messelement bezüglich der Bewegungsachse verhindert werden kann. Anders ausgedrückt kann eine Distanz der Bewegungsachse zu der Erfassungseinrichtung im Wesentlichen konstant gehalten werden, sodass eine durch ein solches Verkanten bzw. eine Distanzänderung bewirkte Änderung eines Sensorsignals verhindert werden kann.

Dabei ist erfindungsgemäß die Erfassungseinrichtung ausgebildet, um bei einer von einer Änderung der Schaltstellung abhängigen Bewegung des an dem Stabelement angebrachten Geberelements eine von der Änderung der Schaltstellung abhängige Bewegungsrichtung des Geberelements entlang einer Bewegungsachse des Stabelements zu erfassen. Eine solche Ausführungsform bietet den Vorteil, dass bei einer ausschließlichen Messung einer Bewegungsrichtung eine Kompensation von herstellungsbedingten und/oder montagebedingten Toleranzen erreicht werden kann.

Gemäß einer Ausführungsform der Erfindung weist die Erfassungseinrichtung einen auf einem Magnetprinzip basierenden Sensor und das Geberelement einen Magneten oder ein magnetisierbares Material auf. Dabei kann die Erfassungseinrichtung bzw. die Sensorvorrichtung einen Magnetfeldsensor, Hall-Sensor oder dergleichen aufweisen. Das Geberelement kann beispielsweise als ein Permanentmagnet oder als eine aufzumagnetisierende Einheit ausgeführt sein. Eine solche Ausführungsform bietet den Vorteil, dass zur Schaltstellungserfassung eine Position und/oder Bewegung des Geberelements berührungslos bestimmt werden kann, auch wenn beispielsweise die Erfassungseinrichtung durch einen Luftspalt, eine Gehäusewand oder dergleichen getrennt von dem Geberelement angeordnet ist.

Insbesondere kann das Stabelement aus Aluminium oder Kunststoff ausgeformt sein. Das Stabelement weist erfindungsgemäß ein nichtmagnetisches Material auf. Eine solche Ausführungsform bietet den Vorteil, dass eine Positionsbestimmung bzw. Bewegungsbestimmung des Geberelements durch die Erfassungseinrichtung nicht gestört bzw. beeinträchtigt wird.

Die Schaltgabel kann das abhängig von der Schaltstellung positionierte Getriebeelement des Fahrzeuggetriebes repräsentieren. Die Schaltwelle kann abhängig von der Schaltstellung translatorisch bewegbar sein. Die Schaltwelle kann ausgebildet sein, um die Schaltgabel abhängig von der Schaltstellung entlang einer Achse der Schaltwelle zu verschieben. Mittels des zumindest einen Verbindungselements ist eine von der Schaltstellung abhängige translatorische Bewegung der Schaltgabel in eine translatorische Bewegung des Stabelements übertragbar. Mittels einer Version der vorstehend genannten Sensorvorrichtung kann eine Schaltstellung bzw. ein Schaltzustand des Fahrzeuggetriebes vorteilhaft erfasst werden.

Dabei kann das zumindest eine Verbindungselement ausgebildet sein, um eine von einer Änderung der Schaltstellung abhängige Bewegung von der Schaltgabel auf das Stabelement der Sensorvorrichtung zu übertragen. Mittels des zumindest einen Verbindungselements ist eine von der Schaltstellung abhängige translatorische Bewegung der Schaltgabel in eine translatorische Bewegung des Stabelements übertragbar. Eine solche Ausführungsform bietet den Vorteil, dass die Schaltstellung mittels der Sensorvorrichtung zuverlässig erfasst werden kann.

Gemäß einer Ausführungsform kann das zumindest eine Verbindungselement eine Verbindungsstange aufweisen, deren erstes Ende mit der Schnittstelle des Stabelements mechanisch gekoppelt ist und deren zweites Ende einen Kugelabschnitt aufweist oder mit einem Kugelelement verbunden ist. Hierbei kann der Kugelabschnitt oder das Kugelelement ausgebildet sein, um mechanisch mit der Schaltgabel verbunden zu sein. Dabei kann der Kugelabschnitt oder das Kugelelement beweglich mit der Schaltgabel verbunden sein. Eine solche Ausführungsform bietet den Vorteil, dass durch eine Positionsübertragung über Führungselemente der Sensorvorrichtung sowie das zumindest eine Verbindungselement mit Kugelabschnitt oder Kugelelement eine Kompensation von Toleranzen und Messung einer von einer Änderung des Schaltzustandes abhängigen Bewegungsrichtung ermöglicht wird.

Durch Ausführung des Verfahrens kann mittels einer Version der vorstehend genannten Sensorvorrichtung eine Schaltstellung eines Fahrzeuggetriebes vorteilhaft erfasst werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung eines Fahrzeuggetriebes mit einer Sensorvorrichtung gemäß einem Ausführungsbeispiel der vorliegenden Erfindung; und
- Fig. 2: ein Ablaufdiagramm eines Verfahrens gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

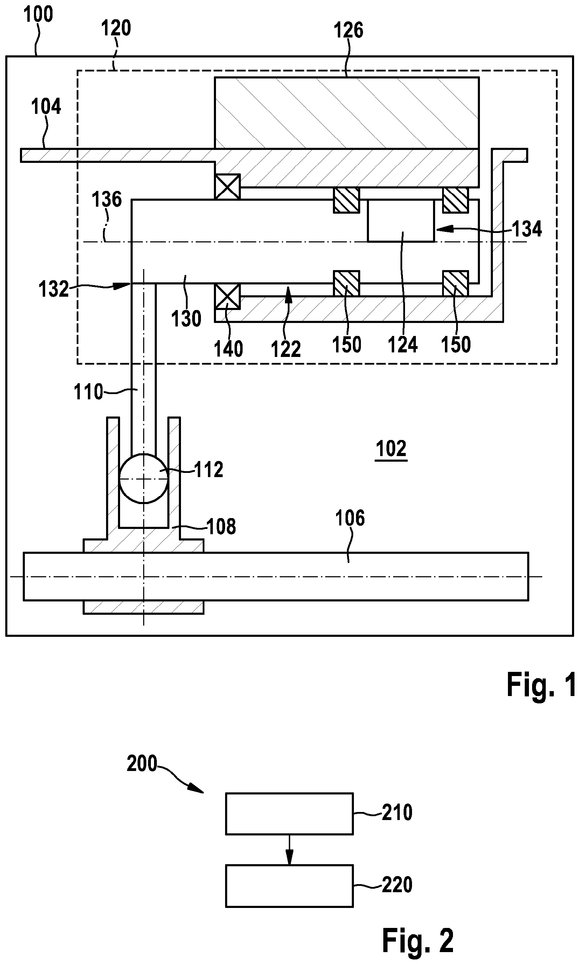

Fig. 1 zeigt eine Darstellung eines Fahrzeuggetriebes mit einer Sensorvorrichtung gemäß einem Ausführungsbeispiel der vorliegenden Erfindung. Gezeigt sind ein Fahrzeuggetriebe 100, ein Getrieberaum 102, ein Getriebegehäuse 104, eine Schaltwelle 106, beispielhaft eine Schaltgabel 108, ein Verbindungselement 110 bzw. eine Verbindungsstange, ein Kugelelement 112, eine Sensorvorrichtung 120, ein Nebenraum 122, ein Geberelement 124 beispielhaft in Gestalt eines Permanentmagneten, eine Erfassungseinrichtung 126 bzw. Sensor oder Sensorelement, ein Stabelement 130, eine Schnittstelle 132, ein Aufnahmeabschnitt 134, eine Bewegungsachse 136, ein Dichtelement 140 und beispielhaft zwei Führungselemente 150. Außerhalb des Getrieberaums 102 und des Nebenraums 122 befindet sich ein Außenbereich des Fahrzeuggetriebes 100.

Das Fahrzeuggetriebe 100 weist den Getrieberaum 102 auf, der mittels des Getriebegehäuses 104 von dem Außenbereich getrennt ist. Innerhalb des Getriebegehäuses 104 sind in dem Getrieberaum 102 die Schaltwelle 106 und die Schaltgabel 108 angeordnet. Die Schaltgabel 108 ist beweglich an der Schaltwelle 106 angebracht. Die Schaltwelle 106 ist ausgebildet, um die Schaltgabel 108 zu führen. Die Schaltwelle 106 ist translatorisch verschiebbar ausgeführt. In Abhängigkeit von einer gewählten Schaltstellung des Fahrzeuggetriebes 100 ist die Schaltwelle 106 entsprechend translatorisch verschoben. Gemäß einem alternativen Ausführungsbeispiel kann die Schaltwelle 106 drehbar sein und das Geberelement 124 entsprechend angeordnet sein. Die Schaltwelle 106 ist ausgebildet, um eine von der Schaltstellung abhängige Bewegung auf die Schaltgabel 108 in Form einer translatorischen Bewegung der Schaltgabel zu übertragen. Die Schaltgabel 108 ist ausgebildet, um durch eine von der Schaltstellung abhängigen Bewegung der Schaltwelle 106 in eine translatorische Bewegung entlang einer Achse der Schaltwelle 106 versetzt zu werden. Auch wenn es in Fig. 1 nicht dargestellt ist, so weist das Fahrzeuggetriebe 100 weitere Getriebeelemente auf. Die Schaltgabel 108 ist in Abhängigkeit von einer Schaltstellung des Fahrzeuggetriebes 100 in mechanischen Kontakt mit zumindest einem weiteren Getriebeelement bringbar oder aus einem mechanischen Kontakt mit zumindest einem weiteren Getriebeelement lösbar.

Ferner weist das Fahrzeuggetriebe 100 die Sensorvorrichtung 120 auf. Die Sensorvorrichtung 120 ist zum Erfassen der Schaltstellung des Fahrzeugbetriebes 100 ausgebildet. Die Sensorvorrichtung 120 weist den Nebenraum 122, das Geberelement 124, die Erfassungseinrichtung 126, das Stabelement 130, die Schnittstelle 132, den Aufnahmeabschnitt 134, das Dichtelement 140 und die Führungselemente 150 auf.

Das Stabelement 130 erstreckt sich von dem Getrieberaum 102 in den Nebenraum 122. Hierbei ist ein erstes Ende des Stabelements 130 in dem Getrieberaum 102 angeordnet und ist ein zweites Ende des Stabelements 130 in dem Nebenraum 122 angeordnet. Das Stabelement 130 weist die Schnittstelle 132 und den Aufnahmeabschnitt 134 auf. Ferner ist die Bewegungsachse 136 des Stabelements 130 dargestellt. Die Bewegungsachse 136 des Stabelements 130 erstreckt sich entlang einer Längserstreckungsachse des Stabelements 130. Das Stabelement 130 ist ausgebildet, um sich in Abhängigkeit von einer Änderung der Schaltstellung bzw. in Abhängigkeit von einer Bewegung der Schaltgabel 108 entlang der Bewegungsachse 136 zu bewegen.

Die Schnittstelle 132 des Stabelements 130 ist an dem in dem Getrieberaum 102 angeordneten, ersten Ende des Stabelements 130 angeordnet. An der Schnittstelle 132 ist das Stabelement 130 mittels des Verbindungselements 110 und des Kugelelements 112 mit der Schaltgabel 108 verbunden. Dabei ist das Verbindungselement 110 an der Schnittstelle 132 des Stabelements 130 befestigt. Über das Kugelelement 112 ist das Verbindungselement 110 bezüglich der Schaltgabel 108 um eine Achse schwenkbar mit der Schaltgabel 108 verbunden. Das Verbindungselement 110 und das Kugelelement 112 sind ausgebildet, um die von der Schaltstellung abhängige Bewegung der Schaltgabel 108 auf das Stabelement 130 zu übertragen.

Der Nebenraum 122 ist von dem Getrieberaum 102 mittels des Dichtelements 140 abgedichtet. Hierbei erstreckt sich das Stabelement 130 durch das Dichtelement 140 hindurch bzw. ist das Stabelement 130 durch das Dichteelement 140 hindurchgeführt. Das Dichteelement 140 ist das Stabelement 130 in einem Bereich zwischen der Schnittstelle 132 und dem Aufnahmeabschnitt 134 umgebend angeordnet. Die Führungselemente 150 sind in dem Nebenraum 122 angeordnet. Die Führungselemente 150 sind ausgebildet, um das Stabelement 130 bei einer Bewegung entlang der Bewegungsachse 136 zu führen bzw. auf der Bewegungsachse 136 zu halten. Durch den abgedichteten Nebenraum 122 wird eine Magnetkapselung für eine Positionssteuerung, hier eine Getriebesteuerung erreicht.

Der Aufnahmeabschnitt 134 des Stabelements 130 ist an dem in dem Nebenraum 122 angeordneten, zweiten Ende des Stabelements 130 angeordnet. In dem Aufnahmeabschnitt 134 ist das Geberelement 124 aufgenommen. Bei einer Bewegung des Stabelements 130 entlang der Bewegungsachse 136 verbleibt das Geberelement 124 innerhalb des Nebenraums 122, auch wenn dies in Fig. 1 nicht explizit dargestellt ist.

Die Erfassungseinrichtung 126 der Sensorvorrichtung 120 ist beispielhaft an einer Außenoberfläche des Getriebegehäuses 104 angeordnet. Dabei ist die Erfassungseinrichtung 126 in einem zu dem Nebenraum 122 benachbarten Oberflächenbereich der Außenoberfläche des Getriebegehäuses 104 angeordnet. Die Erfassungseinrichtung 126 ist ausgebildet, um mittels eines magnetischen Sensorprinzips eine von der Schaltstellung abhängige Position des Geberelements 124 oder eine von einer Änderung der Schaltstellung abhängige Bewegung des Geberelements 124 zu bestimmen, um die Schaltstellung des Fahrzeuggetriebes 100 zu erfassen.

Dargestellt ist in Fig. 1 somit ein Ausschnitt eines Getriebesteuermoduls des Fahrzeuggetriebes 100 mit der Sensorvorrichtung 120 einschließlich einer Magnethalterung mit Lagerung und Kapselung. Bei einer Änderung der Schaltstellung erfolgt eine translatorische Bewegung der Schaltwelle 106. Diese Bewegung der Schaltwelle 106 bewirkt eine Verschiebungsbewegung der Schaltgabel 108 entlang einer Achse der Schaltwelle 106. Über das Kugelelement 112 und das Verbindungselement 110 wird die Verschiebungsbewegung der Schaltgabel 108 auf das Stabelement 130 übertragen. Dabei bewegt sich das Stabelement 130 entlang der Bewegungsachse 136. Somit wird auch das in dem Aufnahmeabschnitt 134 aufgenommene Geberelement 124 mit dem Stabelement 130 mitbewegt. Die Erfassungseinrichtung 126 ist ausgebildet, um eine solche Positionsänderung des Geberelements 124 zu erkennen. Basierend auf der Positionsänderung des Geberelements kann die Änderung der Schaltstellung erfasst werden.

Fig. 2 zeigt ein Ablaufdiagramm eines Verfahrens 200 gemäß einem Ausführungsbeispiel der vorliegenden Erfindung. Das Verfahren 200 dient zum Erfassen einer Schaltstellung eines Fahrzeuggetriebes, das einen Getrieberaum aufweist, in dem Getriebeelemente angeordnet sind. Das Verfahren 200 weist einen Schritt 210 des Übertragens einer von einer Änderung der Schaltstellung abhängigen Bewegung von einem abhängig von der Schaltstellung positionierten Getriebeelement, das in dem Getrieberaum angeordnet ist, auf ein Stabelement auf. Hierbei ist das Stabelement sich von dem Getrieberaum in einen von dem Getrieberaum abgedichteten Nebenraum erstreckend und in Abhängigkeit von der Schaltstellung bewegbar angeordnet. Das Stabelement weist dabei eine in dem Getrieberaum angeordnete Schnittstelle zum Koppeln des Stabelements mit dem abhängig von der Schaltstellung positionierten Getriebeelement und einen in dem Nebenraum angeordneten Aufnahmeabschnitt auf. Auch weist das Verfahren 200 einen Schritt 220 des Bestimmens einer von der Schaltstellung abhängigen Position eines Geberelements oder einer von einer Änderung der Schaltstellung abhängigen Bewegung eines Geberelements mittels einer Erfassungseinrichtung auf, um die Schaltstellung des Fahrzeuggetriebes zu erfassen. Hierbei ist das Geberelement an dem Aufnahmeabschnitt des Stabelements angebracht. Das Verfahren 200 kann in Verbindung bzw. unter Verwendung einer Sensorvorrichtung wie der Sensorvorrichtung aus Fig. 1 vorteilhaft ausgeführt werden. Durch Ausführung des Verfahrens 200 kann mittels einer Sensorvorrichtung wie der Sensorvorrichtung aus Fig. 1 eine Schaltstellung eines Fahrzeuggetriebes vorteilhaft erfasst werden.

Die beschriebenen Ausführungsbeispiele sind nur beispielhaft gewählt.

### Bezugszeichenliste

- 100: Fahrzeuggetriebe
- 102: Getrieberaum
- 104: Getriebegehäuse
- 106: Schaltwelle
- 108: Schaltgabel
- 110: Verbindungselement
- 112: Kugelelement
- 120: Sensorvorrichtung
- 122: Nebenraum
- 124: Geberelement
- 126: Erfassungseinrichtung
- 130: Stabelement
- 132: Schnittstelle
- 134: Aufnahmeabschnitt
- 136: Bewegungsachse
- 140: Dichtelement
- 150: Führungselement
- 200: Verfahren zum Erfassen
- 210: Schritt des Übertragens
- 220: Schritt des Bestimmens

## Patentansprüche

1. Fahrzeuggetriebe (100), das einen Getrieberaum (102) aufweist, in dem Getriebeelemente (106, 108, 110, 112) angeordnet sind, wobei das Fahrzeuggetriebe (100) ferner folgende Merkmale aufweist:
ein Getriebegehäuse (104);
eine Schaltgabel (108), die in dem Getrieberaum (102) angeordnet ist und ausgebildet ist, um zumindest ein Getriebeelement zu schalten;
eine Schaltwelle (106), die in dem Getrieberaum (102) angeordnet ist und ausgebildet ist, um die Schaltgabel (108) in Abhängigkeit von einer Schaltstellung des Fahrzeuggetriebes (100) zu bewegen; und
eine Sensorvorrichtung (120) zum Erfassen einer Schaltstellung des Fahrzeuggetriebes (100), die Sensorvorrichtung (120) umfassend
- ein Stabelement (130), das sich von dem Getrieberaum (102) in einen von dem Getrieberaum (102) abgedichteten Nebenraum (122) erstreckend und in Abhängigkeit von der Schaltstellung bewegbar angeordnet ist, wobei das Stabelement (130) eine in dem Getrieberaum (102) angeordnete Schnittstelle (132) zum Koppeln des Stabelements (130) mit einem abhängig von der Schaltstellung positionierten Getriebeelement (108) und einen in dem Nebenraum (122) angeordneten Aufnahmeabschnitt (134) aufweist,
- ein Geberelement (124), das an dem Aufnahmeabschnitt (134) des Stabelements (130) angebracht ist, und
- eine Erfassungseinrichtung (126) zum Erfassen einer von der Schaltstellung abhängigen Position des Geberelements (124) oder einer von einer Änderung der Schaltstellung abhängigen Bewegung des Geberelements (124),
wobei die Schnittstelle (132) des Stabelements (130) der Sensorvorrichtung (120) mittels zumindest eines Verbindungselements (110, 112) mechanisch mit der Schaltgabel (108) gekoppelt ist,
wobei mittels des Getriebegehäuses (104) der Getrieberaum (102) und der Nebenraum (122) von dem Außenbereich des Fahrzeuggetriebes (100) getrennt ist, wobei die Erfassungseinrichtung (126) der Sensorvorrichtung (120) an einer Außenoberfläche des Getriebegehäuses (104) angeordnet ist,
wobei die Sensorvorrichtung (120) zumindest ein Dichtelement (140) zum fluiddichten und/oder partikeldichten Abdichten des Nebenraums (122) von dem Getrieberaum (102) aufweist, wobei das Stabelement (130) durch das zumindest eine Dichtelement (140) hindurchgeführt ist,
wobei die Erfassungseinrichtung (126) einen auf einem Magnetprinzip basierenden Sensor aufweist und das Geberelement (124) einen Magneten oder ein magnetisierbares Material aufweist, und
wobei das Stabelement (130) ein nichtmagnetisches Material aufweist.

2. Fahrzeuggetriebe (100) gemäß Anspruch 1, mit zumindest einem Führungselement (150), das in dem Nebenraum (122) zumindest teilweise um das Stabelement (130) herum angeordnet ist, wobei das zumindest eine Führungselement (150) ausgebildet ist, um bei einer von einer Änderung der Schaltstellung abhängigen Bewegung des Stabelements (130) das Stabelement (130) in dem Nebenraum (122) entlang einer Bewegungsachse (136) des Stabelements (130) zu führen.

3. Fahrzeuggetriebe (100) gemäß einem der vorangegangenen Ansprüche, bei der die Erfassungseinrichtung (126) ausgebildet ist, um bei einer von einer Änderung der Schaltstellung abhängigen Bewegung des an dem Stabelement (130) angebrachten Geberelements (124) eine von der Änderung der Schaltstellung abhängige Bewegungsrichtung des Geberelements (124) entlang einer Bewegungsachse (136) des Stabelements (130) zu erfassen.

4. Fahrzeuggetriebe (100) gemäß einem der vorangegangenen Ansprüche, bei der das Stabelement (130) aus Aluminium oder Kunststoff ausgeformt ist.

5. Fahrzeuggetriebe (100) gemäß einem der vorangegangenen Ansprüche, bei dem das zumindest eine Verbindungselement (110, 112) ausgebildet ist, um eine von einer Änderung der Schaltstellung abhängige Bewegung von der Schaltgabel (108) auf das Stabelement (130) der Sensorvorrichtung (120) zu übertragen.

6. Fahrzeuggetriebe (100) gemäß einem der vorangegangenen Ansprüche, bei dem das zumindest eine Verbindungselement (110, 112) eine Verbindungsstange (110) aufweist, deren erstes Ende mit der Schnittstelle (132) des Stabelements (130) mechanisch gekoppelt ist und deren zweites Ende einen Kugelabschnitt aufweist oder mit einem Kugelelement (112) verbunden ist, wobei der Kugelabschnitt oder das Kugelelement (112) ausgebildet ist, um mechanisch mit der Schaltgabel (108) verbunden zu sein.

7. Verfahren (200) zum Erfassen einer Schaltstellung eines Fahrzeuggetriebes (100) gemäß einem der vorangegangenen Ansprüche, wobei das Verfahren (200) folgende Schritte aufweist:
Übertragen (210) einer von einer Änderung der Schaltstellung abhängigen Bewegung von dem abhängig von der Schaltstellung positionierten Getriebeelement (108), das in dem Getrieberaum (102) angeordnet ist, auf das Stabelement (130),; und
Bestimmen (220) einer von der Schaltstellung abhängigen Position des Geberelements (124) oder einer von einer Änderung der Schaltstellung abhängigen Bewegung des Geberelements (124), um die Schaltstellung des Fahrzeuggetriebes (100) zu erfassen.

## Claims

1. Vehicle transmission (100), comprising a transmission space (102) in which transmission elements (106, 108, 110, 112) are accommodated, such that the vehicle transmission (100) also has the following features:
a transmission housing (104),
a shift fork (108), which is accommodated in the transmission space (102) and is designed to shift at least one transmission element,
a selector shaft (106), which is accommodated in the transmission space (102) and is designed to move the shift fork (108) in a manner that depends on a shift position of the vehicle transmission (100), and
a sensor device (120) for detecting a shift position of the vehicle transmission (100),
the said sensor device (120) comprising
- a rod element (130), which extends from the transmission space (102) into an adjoining space (122) that is sealed relative to the transmission space (102), and which is arranged to move in a manner that depends on the shift position, wherein the rod element (130) has an interface (132) arranged in the transmission space (102) for coupling the rod element (130) to a transmission element (108) which latter is positioned in a manner that depends on the shift position, and a receiving section (134) arranged in the said adjoining space (122),
- a transmitter element (124) which is attached to the receiving section (134) of the rod element (130), and
- a detection device (126) for detecting a position of the transmitter element (124) that depends on the shift position, or a movement of the transmitter element (124) that depends on a change of the shift position,
wherein the interface (132) of the rod element (130) of the sensor device (120) is coupled mechanically to the shift fork (108) by means of at least one connecting element (110, 112),
wherein the transmission space (102) and the adjoining space (122) are separated by the transmission housing (104) from the outside area of the vehicle transmission (100),
wherein the detection device (126) of the sensor device (120) is arranged on an outer surface of the transmission housing (104),
wherein the sensor device (120) comprises at least one sealing element (140) for the fluid-tight and/or particle-tight sealing of the adjoining space (122) from the transmission space (102) and the said rod element (130) extends through the said at least one sealing element (140),
wherein the detection device (126) comprises a sensor based on a magnetic principle and the transmitter element (124) comprises a magnet or a magnetisable material, and wherein the rod element (130) is made of a non-magnetic material.

2. Vehicle transmission (100) according to Claim 1, having at least one guiding element (150) which is arranged in the said adjoining space (122) at least partially around the rod element (130), wherein the said at least one guiding element (150) is designed in order to guide the rod element (130) along a movement axis (136) in the event that the rod element (130) moves in a manner that depends on a change of the shift position.

3. Vehicle transmission (100) according to either of the preceding Claims, in which the detection device (126) is designed to detect a movement direction of the transmitter element (124) along a movement axis (136) of the rod element (130) in the event of a movement of the transmitter element (124) attached to the rod element (130), the said movement depending on a change of the shift position,.

4. Vehicle transmission (100) according to any of the preceding claims, wherein the rod element (130) is made of aluminium or plastic.

5. Vehicle transmission (100) according to any of the preceding claims, wherein the at least one connecting element (110, 112) is designed to transmit a movement that depends on a change of the shift position, from the shift fork (108) to the rod element (130).

6. Vehicle transmission (100) according to any of the preceding claims, wherein the at least one connecting element (110, 112) comprises a connecting rod (110) whose first end is mechanically coupled to the interface (132) of the rod element (130) and whose second end comprises a ball section or is connected to a ball element (112), such that the ball section or the ball element (112) is designed to be mechanically connected to the shift fork (108).

7. Method (200) for detecting a shift position of a vehicle transmission (100) according to any of the preceding claims, the said method comprising the following steps:
transmission (210) of a movement that depends on a change of the shift position, from the transmission element (108) positioned in a manner that depends on the shift position, which element (108) is located in the transmission space (102), to the rod element (130); and
determination (220) of a shift-position-dependent position of the transmitter element (124) or of a movement of the transmitter element (124), that depends on a change of the shift position, in order to detect the shift position of the vehicle transmission (100).

## Revendications

1. Boîte de vitesse (100) de véhicule, qui un espace (102) de boîte de vitesse dans lequel sont disposés des éléments (106, 108, 110, 112) de boîte de vitesse, la boîte de vitesse (100) de véhicule ayant en outre les caractéristiques suivantes :
un carter (104) de boîte de vitesse;
une fourchette (108) de changement de vitesse, qui est disposée dans l'espace (102) de boîte de vitesse et qui est constituée pour enclencher au moins un élément de boîte de vitesse;
un arbre (106) d'enclenchement, qui est disposé dans l'espace (102) de boîte de vitesse et qui est constitué pour déplacer la fourchette (108) de changement de vitesse en fonction d'un position d'enclenchement de la boîte de vitesse (100) de véhicule; et
un système (120) de capteur pour détecter une position d'enclenchement de la boîte de vitesse (100) du véhicule, le système (120) de capteur comprenant
- un élément (130) en barreau qui s'étend de l'espace (102) de la boîte de vitesse à un espace (122) auxiliaire rendu étanche par rapport à l'espace (102) de la boîte de vitesse et qui est monté mobile en fonction de la position d'enclenchement, l'élément (130) de barreau ayant une interface (132) disposée dans l'espace (102) de la boîte de vitesse pour coupler l'élément (130) de barreau à un élément (108) de boîte de vitesse mis en position en fonction de la position d'enclenchement et une partie (134) de réception disposée dans l'espace (122) auxiliaire,
- un élément (124) indicateur, qui est monté sur la partie (134) de réception de l'élément (130) de barreau et
- un dispositif (126) de détection pour détecter une position, en fonction de la position d'enclenchement, de l'élément (124) indicateur ou un déplacement, en fonction d'une modification de la position d'enclenchement, de l'élément (124) indicateur, l'interface (132) de l'élément (130) de barreau du système (120) de capteur étant couplé mécaniquement à la fourchette (108) de changement de vitesse au moyen d'au moins un élément (110, 112) de liaison,
dans laquelle, au moyen du carter (104) de la boîte de vitesse, l'espace (102) de la boîte de vitesse et l'espace (122) auxiliaire sont séparés de la région extérieure à la boîte de vitesse (100) du véhicule,
dans laquelle le dispositif (126) de détection du système (120) de capteur est monté sur une surface extérieure du carter (104) de la boîte de vitesse,
dans laquelle le système (120) de capteur a au moins un élément (140) d'étanchéité pour rendre étanche aux fluides et/ou aux particules l'espace (122) auxiliaire par rapport à l'espace (102) de la boîte de vitesse, l'élément (130) de barreau étant traversé par le au moins un élément (140) d'étanchéité,
dans laquelle le dispositif (126) de détection a un capteur reposant sur un principe d'aimant et l'élément (124) indicateur à un aimant ou un matériau aimantable et
dans laquelle l'élément (130) de barreau est en un matériau amagnétique.

2. Boîte de vitesse (100) de véhicule suivant la revendication 1, comprenant au moins un élément (150) de guidage, qui est disposé dans l'espace (122) auxiliaire au moins en partie autour de l'élément (130) de barreau, le au moins un élément (150) de guidage étant constitué pour, lors d'un déplacement, qui dépend d'une modification de la position d'enclenchement, de l'élément (130) de barreau, guidé l'élément (130) de barreau dans l'espace (122) auxiliaire le long d'un axe (136) de déplacement de l'élément (130) de barreau.

3. Boîte de vitesse (100) de véhicule suivant l'une des revendications précédentes, dans laquelle le dispositif (126) de détection est constitué pour, lors d'un déplacement, qui dépend d'une modification de la position d'enclenchement, de l'élément (124) indicateur monté sur l'élément (130) de barreau, détecter un sens de déplacement, qui dépend de la modification de la position d'enclenchement, de l'élément (124) indicateur le long d'un axe (136) de déplacement de l'élément (130) de barreau.

4. Boîte de vitesse (100) de véhicule suivant l'une des revendications précédentes, dans laquelle l'élément (130) de barreau est en aluminium ou en matière plastique.

5. Boîte de vitesse (100) de véhicule suivant l'une des revendications précédentes, dans laquelle le au moins un élément (110, 112) de liaison est constitué pour transmettre un déplacement, en fonction d'une modification de la position d'enclenchement, de la fourchette (108) de changement de vitesse à l'élément (130) de barreau du système (120) de capteur.

6. Boîte de vitesse (100) de véhicule suivant l'une des revendications précédentes, dans laquelle le au moins un élément (110, 112) de liaison a une barre (110) de liaison, dont le premier bout est couplé mécaniquement à l'interface (132) de l'élément (130) de barreau et dont le deuxième bout a une partie sphérique où est relié à un élément (112) sphérique, la partie sphérique ou l'élément (112) sphérique étant constitué pour être lié mécaniquement à la fourchette (108) de changement de vitesse.

7. Procédé (200) de détection d'une position d'enclenchement d'une boîte de vitesse (100) de véhicule suivant l'une des revendications précédentes, le procédé (200) ayant les stades suivants :
transmission (210) d'un déplacement, en fonction d'une modification de la position d'enclenchement, de l'élément (108) de boîte de vitesse mis en position en fonction de la position d'enclenchement et disposé dans l'espace (102) de la boîte de vitesse, à l'élément (130) de barreau et
détermination (220) d'une position, qui dépend de la position d'enclenchement, de l'élément (124) indicateur ou d'un déplacement, qui dépend de la modification de la position d'enclenchement, de l'élément (124) indicateur pour détecter la position d'enclenchement de la boîte de vitesse (100) du véhicule.
